# EUROPEAN PATENT APPLICATION

(11) **EP 1 912 146 A1**
(43) Date of publication of application: **16.04.2008**
(21) Application number: 06121995.2
(22) Date of filing: 09.10.2006
(51) Int. Cl.: G06F 21/00

(54) **A computer-implemented method and system for binding digital rights management information to a software application**

(71) Applicant: MACROVISION CORPORATION, Santa Clara, CA 25050 (US)
(72) Inventor: Sánchez, Pau, 03205 Elche (Alicante) (ES)
(74) Representative: Elzaburu Marquez, Alberto

(57) **Abstract**

A computer-implemented method and system for binding digital rights management information to a software application are disclosed. The method and system include components operable to insert a digital rights management (DRM) component between a software application component and a persistent data store, intercept a request from the software application component for access to the persistent data store, bind DRM component data with software application component data in a bound data set, and store the bound data set in the persistent data store.

## Description

### BACKGROUND

### 1. Technical Field

This disclosure relates to digital rights management methods and systems. More particularly, the present disclosure relates to binding digital rights management information to a software application.

### 2. Related Art

Digital rights management (DRM) solutions need to preserve trial information on the client machine. The purpose of this information is to store the current trial status for given protected applications so that each time the application is launched, the trial status is updated. Also, each time a game is launched, the trial criteria is checked so the protected application can expire when the trial is over (e.g. after three uses). When the trial criteria expires the protected application, the only way to use the application again is to pay for a subscription or to buy the full version of the application. Conventional approaches save this trial data in traditional ways as persistent information that could be saved and restored using a provided application programming interface (API) by the client operating system (OS). Usual examples of common persistence methods used in conventional systems include: 1) saving data to files in the hard drive and restoring the information back from those files stored on a hard drive; 2) accessing the OS registry to save and restore information; or 3) accessing and modifying some known files in the application (or known files that are in the basic OS installation), so using, for example, steganographic methods, information can be saved and restored in a way that is not readily noticeable by users (e.g. altering the lowest bits in images, music, or videos). These conventional methods rely on the fact that the next time the protected application is executed, all saved trial information will be recovered so the trial status can be updated conveniently. One problem with conventional approaches is that a common attack resets the DRM trial status information by collecting all the persistent information that the DRM accesses and modifies, so that when the application exits, the information is restored back to the saved state prior to execution of the application. These attacks on the DRM typically attempt to avoid the modification of any of the persistent information saved or updated by the original protected application. In this way, the effectiveness of the DRM can be circumvented and the protected application can be used without limitation.

Thus, a computer-implemented method and system for binding digital rights management information to a software application are needed.

### BRIEF DESCRIPTION OF THE DRAWINGS

Embodiments illustrated by way of example and not limitation in the figures of the accompanying drawings, in which:

Figure 1 depicts a conventional protected software application program.

Figure 2 depicts the conventional system illustrated in Figure 1 in a scenario where a hacker has circumvented the effectiveness of the DRM component.

Figure 3 depicts an alternative implementation of a conventional protected software application program.

Figure 4 depicts an example embodiment showing a protected software application program including a software application portion and a digital rights management (DRM) portion.

Figures 5 and 6 are flow diagrams illustrating the processing steps in various embodiments.

Figures 7 and 8 are block diagrams of a computing system on which an embodiment may operate and in which embodiments may reside.

### DETAILED DESCRIPTION

A computer-implemented method and system for binding digital rights management information to a software application are disclosed. In the following description, numerous specific details are set forth. However, it is understood that embodiments may be practiced without these specific details. In other instances, well-known processes, structures and techniques have not been shown in detail in order not to obscure the clarity of this description.

Various embodiments include a mechanism to bind digital rights management information to an application (host software) without requiring code changes to the application. Various embodiments strive to improve the binding between the host executable and the DRM information while maintaining the benefit of not requiring modifications of the host at the source-code level.

In various embodiments described herein, persistent DRM information is saved using the same persistent data channels used by the protected software application to save its own data. In this matter, it becomes extremely difficult for hackers to separate DRM information from protected application software information. In various embodiments as described in more detail below, a protected software application makes operating system (OS) calls or physical media access to save and retrieve data through a DRM access layer. Because DRM trial status information and software application information are both channeled through the same DRM access layer, there is no way of altering such information to remove only the DRM information without affecting the persistent application program information as well. In order to preserve DRM information, it is important to use the same input/output (I/O) data channels that the protected software application uses to store and retrieve data by using cryptographic methods to securely bind DRM information with software application program data. Various embodiments are described in more detail below.

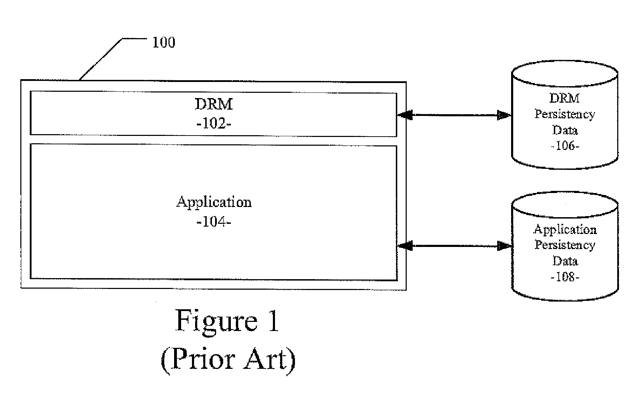

. Figure 1 depicts a conventional protected software application program 100 comprising an application portion 104 and a digital rights management (DRM) portion 102. Software application 104 represents any conventional software application program, software game, business or enterprise software, and similar commercially available software products for sale or license. DRM portion 102 represents a conventional software component used to manage access to application 104 in a variety of controlled or limited ways. For example, DRM component 102 can be used in a conventional way to provide users with a trial sampling of application, 104. In such a trial version, DRM component 102 provides a user with limited access to application 104. For example, DRM component 102 could provide a user access to application 104 for limited time, a limited number of uses, or a functionally restricted version of application 104. In a typical conventional configuration, users make access to application 104 through DRM component 102. With each such access by a user, DRM component 102 can store persistent DRM information in a nonvolatile data store 106. Similarly with the execution of application software 104, application 104 can store persistent software application data in nonvolatile data store 108. It will be apparent to those of ordinary skill in the art that are data stores 106 and 108 can be implemented in a conventional memory devices such as hard disk drives, flash memory, magnetic media, and the like. As the user makes access to application 104, DRM component 102 records such access in persistent data store 106. Upon the expiration of a particular trial sample or when a license to application software 104 has expired or elapsed, DRM component 102 can prevent a user from making subsequent access to application 104. In an alternative embodiment, the DRM component 102 can also record a user identifier, user name, device identifier, software license/registration number, or the like so the persistent DRM information can be associated with a particular user and/or a particular device. In this manner, various embodiments allow the sharing of files or software application trials between different users or devices. This will enable a first user to share the first user's saved game or other software application with a second user, without expiring the first user's game or other software application trial status. Similarly, vice-versa, a second user can share the second user's saved game or other software application with a first user, without expiring the second user's game or other software application trial status.

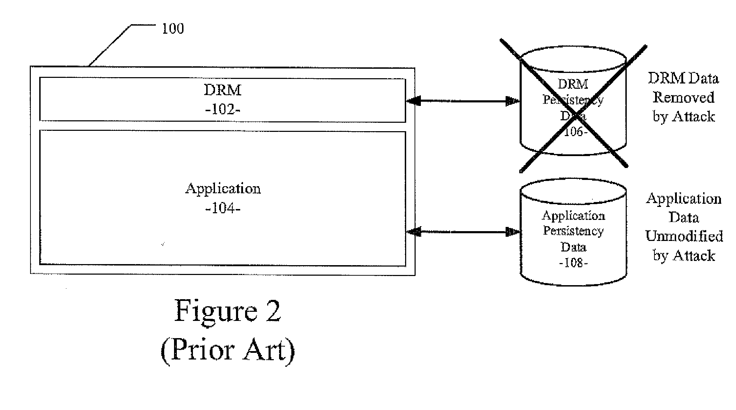

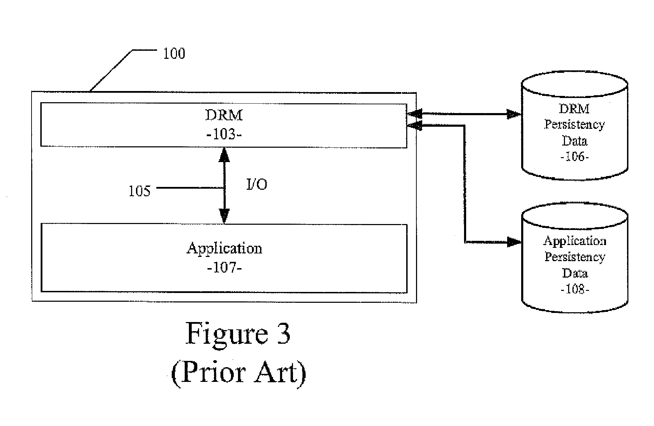

Referring now to Figure 2, the system illustrated in Figure 1 is shown in a scenario where a hacker has circumvented the effectiveness of DRM component 102. In this example, a hacker has attacked the DRM information stored in persistent data store 106. If the DRM information stored in persistent data store 106 is removed or replaced with inaccurate data, the effectiveness of DRM component 102 in protecting access to application 104 is circumvented. In this manner, a hacker can modify or remove DRM information in persistent data store 106 and thereby obtain unlimited access to application. 104. As such, prior art DRM implementations are vulnerable to attacks such as those described above. Referring now to Figure 3, an alternative implementation of a conventional protected software application program is shown. In the conventional implementation of Figure 3, an application program 107 directs all input/output (I/O) to application data store 108 through DRM component 103 via I/O path 105. In a typical conventional configuration, users make access to application 107 through DRM component 103. With each such access by a user, DRM component 103 can store persistent DRM information in a nonvolatile data store 106. Similarly with the execution of application software 107, application 107 can store its own persistent software application data in nonvolatile data store 108. It will be apparent to those of ordinary skill in the art that are data stores 106 and 108 can be implemented in a conventional memory devices such as hard disk drives, flash memory, magnetic media, and the like. As the user makes access to application 107, DRM component 103 records such access in persistent data store 106. However, the conventional implementation illustrated in Figure 3 is still vulnerable to a hacker attack. If the DRM information stored in persistent data store 106 is removed or replaced with inaccurate data, the effectiveness of DRM component 103 in protecting access to application 107 is circumvented. In this manner, a hacker can modify or remove DRM information in persistent data store 106 and thereby obtain unlimited access to application 107. As such, prior art DRM implementations are vulnerable to attacks such as those described above.

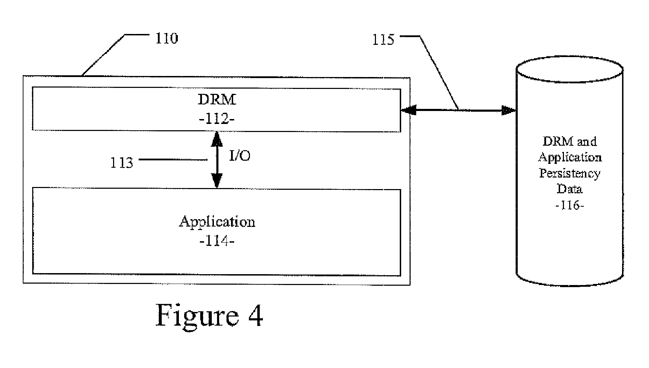

Referring now to Figure 4, an implementation to solve the problems in prior art systems is illustrated. In the improved embodiment as shown in Figure 4, Figure 4 depicts a protected software application program 110 comprising a software application portion 114 and a digital rights management (DRM) portion 112.
Software application 114 represents any conventional software application program, software game, business or enterprise software, and similar commercially available software products for sale or license. DRM portion 112 represents an improved digital rights management software component used to manage access to application 114 in a variety of controlled or limited ways. In the example shown in Figure 4, and input/output (I/O) data channel or data path 113 provides a means by which application 114 transfers application information to/from persistent data store 116. In one embodiment, DRM 112 provides a software layer between application 114 and a conventional operating system (OS). In other embodiments, components of DRM 112 can replace various components of application 114, system drivers, or OS components to provide the software layer between application 114 and the OS or directly provide the software layer between the application 114 and the hardware. In these configurations, DRM 112 can intercept any function calls to the OS made by application 114. Because conventional operating system function calls are a wellknown interface, DRM 112 can be configured to anticipate and intercept these I/O function calls to the OS by application 114. In this manner, DRM 112 is accessed by application 114 any time application 114 needs to access persistent data store 116. In servicing these I/O requests by application 114, application data travels to or from persistent data store 116 through DRM 112 and via data paths 113 and 115.

For its own purposes in retaining persistent DRM information, DRM 112 also makes access to persistent data store 116 via data path 115. These accesses by DAM 112 can be used to store and retrieve DRM information related to limited usage or trial sampling of application 114 by a user. In these cases, DRM information also travels via data path 115 to/from persistent data store 116. Thus, in normal operation, all persistent application data and persistent DRM data travels to/from persistent data store 116 via data path 115. Application-specific information travels to/from application 114 via data paths 113 and 115.

In the embodiment illustrated in Figure 4, persistent DRM information and persistent application 114 information have been combined in persistent data store 116 and transferred via a common data path 115. When application data or DRM data is to be saved in persistent data store 116, the DRM 112 binds the application data and the DRM data together using a variety of techniques. In one embodiment, the application data and the DRM data is combined and encrypted using a cipher. In another embodiment, the application data and the DRM data is combined and scrambled, mixed, hashed, or steganographically hidden to create a bound data set of combined application data and DRM data that is extremely difficult to decipher or unscramble. Steganography is the art and science of writing hidden messages in such a way that no one apart from the intended recipient knows of the existence of the message; this is in contrast to cryptography, where the existence of the message itself is not disguised, but the content is obscured. Steganographically hiding the DRM data with the application can be accomplished using well-known steganographic techniques. These techniques can be used to create a bound data set of combined application data and DRM data. The bound data set can be a data block or a set of streaming data. This bound data set is then written to persistent data store 116. When application 114 and/or DRM 112 need to read the bound data set stored in persistent data store 116, DRM 112 reads the bound data set and decrypts or unscrambles the bound data set prior to sending the unbound data on to application 114 or retaining and using the unbound data within DRM 112. As such, the embodiment illustrated in Figure 4 presents a very difficult configuration for hackers to circumvent. Because the application-specific information and persistent DRM information are bound together in persistent data store 116 in a manner that is extremely difficult to decipher or unscramble, a hacker can no longer conveniently remove just the DRM persistent information without affecting the persistent application 114 information as well. Therefore, **DRM** 112 and application 114 are rendered much more resilient to hacker attack.

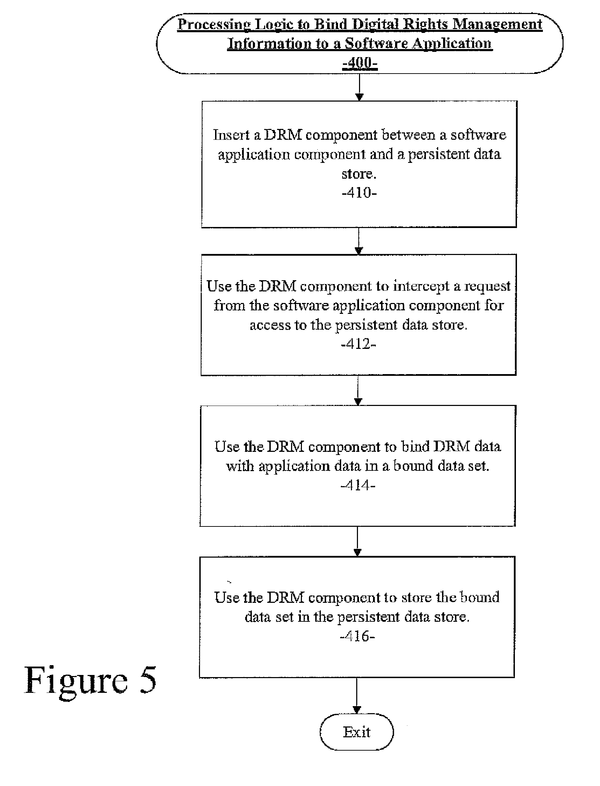

Figure 5 illustrates a flow diagram of the processing flow employed in an example of various embodiments. In processing block 410, a DRM component is inserted between a software application component and an operating system component. This inserted DRM component creates a software layer between the software application and the operating system. When the software application component requests access to a persistent data store, use the DRM component to intercept the request from the software application component for access to the persistent data store (processing block 412). The DRM component binds the DRM data with application data in a bound data set as described above (processing block 414). Finally, the DRM component stores the bound data set (including both DRM data and application data) in the persistent data store (processing block 416). In this manner, the application-specific information and persistent DRM information are bound together in persistent data store 116.

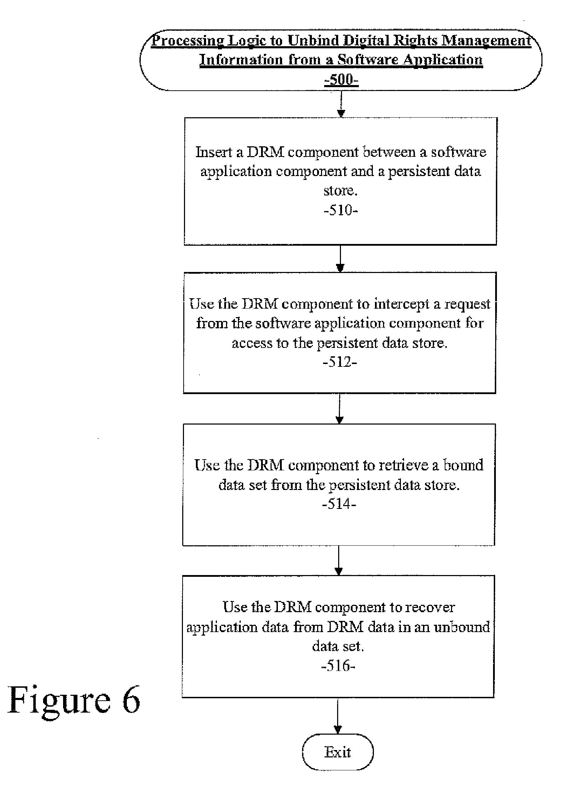

Figure 6 illustrates a flow diagram of the processing flow employed in another example of various embodiments. In processing block 510, a DRM component is inserted between a software application component and an operating system component. This inserted DRM component creates a software layer between the software application and the operating system. When the software application component requests access to a persistent data store, the DRM component intercepts the request from the software application component for access to the persistent data store (processing block 512). The DRM component retrieves a bound data set (including both DRM data and application data) from the persistent data store (processing block 514). Finally, the DRM component recovers the DRM data from the application data to create an unbound data set as described above (processing block 516). It will be apparent to those of ordinary skill in the art that the DRM data can be unbound from the application data using a copy of the bound data set that is transferred to a volatile memory and processed there. In this way, the bound data set (including both DRM data and application data) maintained in the persistent data store is not modified in the unbinding process. The bound data set maintained in the persistent data store remains bound until an older version of the bound data set is overwritten with a newer version. This prevents a hacker from gaining access to an unbound version of the bound data set stored in the persistent data store. The recovered application data can then be sent on to the application and the DRM can use the recovered DRM specific data. In this manner, the application-specific information and persistent DRM information are bound together in persistent data store 116 and then recovered when needed by the application and/or the DRM component.

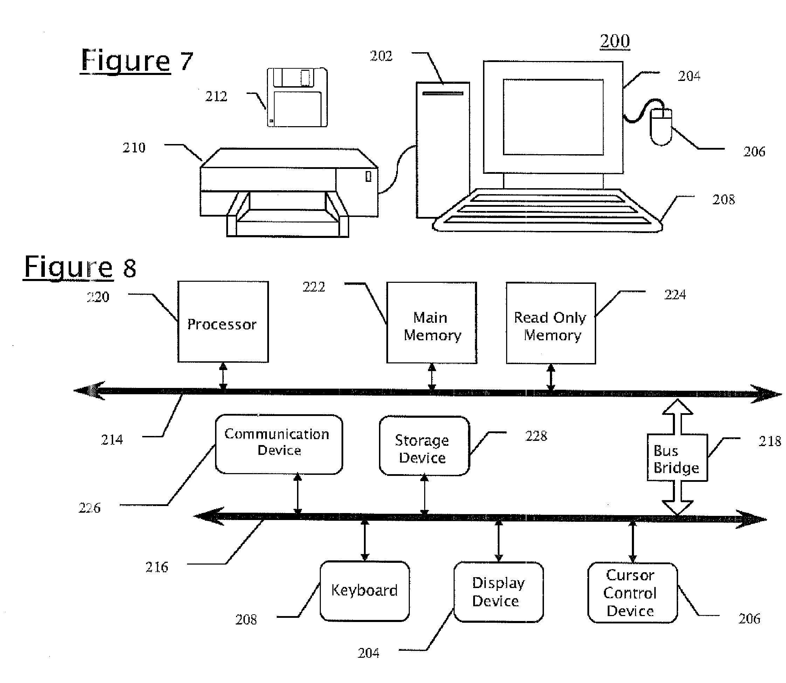

Figures 7 and 8 show an example of a computer system 200 illustrating an exemplary client or server computer system in which the features of an example embodiment may be implemented. Computer system 200 is comprised of a bus or other communications means 214 and 216 for communicating information, and a processing means such as processor 220 coupled with bus 214 for processing information. Computer system 200 further comprises a random access memory (RAM) or other dynamic storage device 222 (commonly referred to as main memory), coupled to bus 214 for storing information and instructions to be executed by processor 220. Main memory 222 also may be used for storing temporary variables or other intermediate information during execution of instructions by processor 220. Computer system 200 also comprises a read only memory (ROM) and /or other static storage device 224 coupled to bus 214 for storing static information and instructions for processor 220.

An optional data storage device 228 such as a magnetic disk or optical disk and its corresponding drive may also be coupled to computer system 200 for storing information and instructions. Computer system 200 can also be coupled via bus 216 to a display device 204, such as a cathode ray tube (CRT) or a liquid crystal display (LCD), for displaying information to a computer user. For example, image, textual, video, or graphical depictions of information may be presented to the user on display device 204. Typically, an alphanumeric input device 208, including alphanumeric and other keys is coupled to bus 216 for communicating information and/or command selections to processor 220. Another type of user input device is cursor control device 206, such as a conventional mouse, trackball, or other type of cursor direction keys for communicating direction information and command selection to processor 220 and for controlling cursor movement on display 204.

A communication device 226 may also be coupled to bus 216 for accessing remote computers or servers, such as a web server, or other servers via the Internet, for example. The communication device 226 may include a modem, a network interface card, or other well-known interface devices, such as those used for interfacing with Ethernet, Token-ring, wireless, or other types of networks. In any event, in this manner, the computer system 200 may be coupled to a number of servers via a conventional network infrastructure.

The system of an example embodiment includes software, information processing hardware, and various processing steps, as described above. The features and process steps of example embodiments may be embodied in machine or computer executable instructions. The instructions can be used to cause a general purpose or special purpose processor, which is programmed with the instructions to perform the steps of an example embodiment. Alternatively, the features or steps may be performed by specific hardware components that contain hard-wired logic for performing the steps, or by any combination of programmed computer components and custom hardware components. While embodiments are described with reference to the Internet, the method and apparatus described herein is equally applicable to other network infrastructures or other data communications systems.

It should be noted that the methods described herein do not have to be executed in the order described, or in any particular order. Moreover, various activities described with respect to the methods identified herein can be executed in repetitive, simultaneous, recursive, serial, or parallel fashion. Information, including parameters, commands, operands, and other data, can be sent and received in the form of one or more carrier waves through communication device 226.

Upon reading and comprehending the content of this disclosure, one of ordinary skill in the art will understand the manner in which a software program can be launched from a computer-readable medium in a computer-based system to execute the functions defined in the software program described above. One of ordinary skill in the art will further understand the various programming languages that may be employed to create one or more software programs designed to implement and perform the methods disclosed herein. The programs may be structured in an object-orientated format using an object-oriented language such as Java, Smalltalk, or C++. Alternatively, the programs can be structured in a procedure-orientated format using a procedural language, such as assembly or C. The software components may communicate using any of a number of mechanisms well known to those of ordinary skill in the art, such as application program interfaces or inter-process communication techniques, including remote procedure calls. The teachings of various embodiments are not limited to any particular programming language or environment, including HTML and XML.

Thus, other embodiments may be realized. For example, Figures 7 and 8 illustrate block diagrams of an article of manufacture according to various embodiments, such as a computer 200, a memory system 222, 224, and 228, a magnetic or optical disk 212, some other storage device 228, and/or any type of electronic device or system. The article 200 may include a computer 202 (having one or more processors) coupled to a computer-readable medium 212, and/or a storage device 228 (e.g., fixed and/or removable storage media, including tangible memory having electrical, optical, or electromagnetic conductors) or a carrier wave through communication device 226, having associated information (e.g., computer program instructions and/or data), which when executed by the computer 202, causes the computer 202 to perform the methods described herein.

Various embodiments are described. In particular, the use of embodiments with various types and formats of user interface presentations may be described. It will be apparent to those of ordinary skill in the art that alternative embodiments of the implementations described herein can be employed and still fall within the scope of the claims set forth below. In the detail herein, various embodiments are described as implemented in computer-implemented processing logic denoted sometimes herein as the "Software". As described above, however, the claimed invention is not limited to a purely software implementation.

Thus, a computer-implemented method and system for binding digital rights management information to a software application are disclosed. While the present invention has been described in terms of several example embodiments, those of ordinary skill in the art will recognize that the present invention is not limited to the embodiments described, but can be practiced with modification and alteration within the spirit and scope of the appended claims. The description herein is thus to be regarded as illustrative instead of limiting.

## Claims

1. A method comprising:
- Inserting a digital rights management (DRM) component between a software application component and persistent data store;
- Intercepting a request from the software application component data in a bound data set; and
- Storing the bound data set in the persistent data store.

2. The method as claimed in claim 1 wherein the persistent data store is remotely connected to the DRM component.

3. The method as claimed in claim 1 wherein the bound data set is bound using one or more of the processes including: encrypting with a cipher, scrambling, steganographically hiding.

4. The method as claimed in claim 2 wherein the bound data set is bound using one or more of the processes including: encrypting with a cipher, scrambling, steganographically hiding.

5. The method as claimed in claim 2 wherein the DRM component data includes information indicative of a particular user, the storage of the DRM component data for the particular user not affecting DRM component data previously stored for a different user.

6. The method as claimed in claim 1 wherein the bound data set is one or more of the types including: a data block, streaming data.

7. A method comprising:
- inserting a digital rights management (DRM) component between a software application component and a persistent data store;
- intercepting a request from the software application component for access to the persistent data store;
- retrieving a bound data set from the persistent data store; and
- recovering software application component data from DRM component data in an unbound data set.

8. The method as claimed in claim 7 wherein the persistent data store is remotely connected to the DRM component.

9. The method as claimed in claim 7 wherein the bound data set is recovered using one or more of the processes including: decrypting with a cipher, unscrambling, exposing steganographically hidden data.

10. The method as claimed in claim 8 wherein the bound data set is recovered using one or more of the processes including: decrypting with a cipher, unscrambling, exposing steganographically hidden data.

11. The method as claimed in claim 7 wherein the unbound data set is one or more of the types including: a data block, streaming data.

12. The method as claimed in claim 7 further including recovering software application component data from DRM component data without modifying the bound data set in the persistent data store.

13. An article of manufacture embodied as a machine-accessible medium including data that, when accessed by a machine, causes the machine to be operable to:
- insert a digital rights management (DRM) component between a software application component and a persistent data store;
- intercept a request from the software application component for access to the persistent data store;
- bind DRM component data with software application component data in a bound data set; and
- store the bound data set in the persistent data store.

14. The article of manufacture as claimed in claim 13 wherein the persistent data store is remotely connected to the DRM component.

15. The article of manufacture as claimed in claim 13 wherein the bound data set is bound using one or more of the processes including: encrypting with a cipher, scrambling, steganographically hiding.

16. The article of manufacture as claimed in claim 13 wherein the bound data set is bound using one or more of the processes including: encrypting with a cipher, scrambling, steganographically hiding.

17. The article of manufacture as claimed in claim 13 wherein the bound data set is stored in the article of manufacture.

18. The article of manufacture as claimed in claim13 wherein the DRM component data includes information indicative of a particular user, the storage of the DRM component data for the particular user not affecting DRM component data previously stored for a different user.

19. The article of manufacture as claimed in claim 13 wherein the bound data set is one or more of the types including: a data block, streaming data.

20. An article of manufacture embodied as a machine-accessible medium including data that, when accessed by a machine, causes the machine to be operable to:
- insert a digital rights management (DRM) component between a software application component and a persistent data store;
- intercept a request from the software application component for access to the persistent data store;
- retrieve a bound data set from the persistent data store; and
- recovering software application component data from DRM component data in an unbound data set.

21. The article of manufacture as claimed in claim 20 wherein the persistent data store is remotely connected to the DRM component.

22. The article of manufacture as claimed in claim 20 wherein the bound data set is recovered using one or more of the processes including: decrypting with a cipher, unscrambling, exposing steganographically hidden data.

23. The article of manufacture as claimed in claim 21 wherein the bound data set is recovered using one or more of the processes including: decrypting with a cipher, unscrambling, exposing steganographically hidden data.

24. The article of manufacture as claimed in claim 20 wherein the unbound data set is one or more of the types including: a data block, streaming data.

25. The article of manufacture as claimed in claim 20 further including recovering software application component data from DRM component data without modifying the bound data set in the persistent data store.
